# EUROPÄISCHE PATENTANMELDUNG

(11) **EP 2 434 186 A1**
(43) Veröffentlichungstag der Anmeldung: **28.03.2012**
(21) Anmeldenummer: 11008568.5
(22) Anmeldetag: 27.05.2009
(51) Int. Cl.: F16K 1/44, B67D 7/36, B67D 7/78

(54) **Vorrichtung zur Verrohrung von Prozessanlagen der Nahrungsmittel- und Getränkeindustrie**

(30) Priorität: 30.05.2008 DE 102008026149; 31.07.2008 DE 102008035940; 15.10.2008 DE 102008051819
(62) Teilanmeldung aus: 09757208.5
(71) Anmelder: GEA Tuchenhagen GmbH, 21514 Büchen (DE)
(72) Erfinder: Burmester, Jens, 23883 Grambek (DE); Südel, Matthias, 23626 Ratekau (DE)

(57) **Zusammenfassung**

Die Erfindung betrifft eine Vorrichtung (1) zur Verrohrung von Prozessanlagen der Nahrungsmittel- und Getränkeindustrie nach dem Oberbegriff des Anspruchs 1. Aufgabe der Erfindung ist es, eine Vorrichtung zur Verrohrung der gattungsgemä-βen Art zu schaffen, die bei hoher Betriebssicherheit höchsten Anforderungen an die Qualität des in ihr behandelten fluiden Produktes gerecht wird, die insgesamt, einschließlich der vermischungssicheren Ventile, einfach, kompakt und kostengünstig aufgebaut ist und die bei allen in der Praxis vorkommenden Anlagenauslegungen einsetzbar ist. Dies wird dadurch erreicht, dass
die Vorrichtung (1) aus wenigstens einem Ventilverteilerbaum (B1, B2, ..., Bi, ..., Bn) besteht, der als langgestrecktes hohles Gebilde (B1a, B2a, ..., Bia, ..., Bna) ausgeführt ist,
dass der Innenraum des Ventilverteilerbaums mit der zugeordneten Rohrverbindung (R; R1, R2, ..., Ri, ..., Rn) verbunden ist,
dass wenigstens eine erste Gruppe Rohrleitungen (2.1, 2.2, ..., 2.i, ..., 2.n) und im Bedarfsfall zusätzlich eine zweite Gruppe Rohrleitungen (3.1, 3.2, ..., 3.i, ..., 3.n) jeweils reihenförmig und in zur Längsachse des hohlen Gebildes parallelen Ebenen angeordnet und an diesem vorbeigeführt sind,
dass der Ventilverteilerbaum wenigstens eine Anschlussöffnung (6a) zum Verbinden seines Innenraumes mit jeder der Rohrleitungen (2.1, 2.2, ..., 2.i, ..., 2.n; 3.1, 3.2, ..., 3.1, ..., 3.n; 4) besitzt, wobei ein in seinem Sitzbereich vermischungssicher ausgestaltetes Ventil (V_{R}) in jeder Verbindung zwischen Anschlussöffnung (6a) und zugeordneter Rohrleitung angeordnet ist und diese Verbindung in unmittelbarer Nähe zum hohlen Gebilde schaltet (**Figur 1**).

## Beschreibung

### TECHNISCHES GEBIET

Die Erfindung betrifft eine Vorrichtung zur Verrohrung von Prozessanlagen der Nahrungsmittel- und Getränkeindustrie nach dem Oberbegriff des Anspruchs 1, wobei diese Vorrichtungen insbesondere dort Anwendung finden, wo die der Produktbearbeitung und dem Produkttransfer dienenden Prozessanlagen hohen mikrobiologischen Qualitätsanforderungen und Forderungen nach bester Reinigungsfähigkeit im Durchfluss (sog. CIP-Fähigkeit) unterliegen und wo eine kompakte und flexible Auslegung der Anlage erforderlich ist. Die Anwendung schließt auch Bereiche insbesondere der Pharmazie und der Biotechnologie ein.

### STAND DER TECHNIK

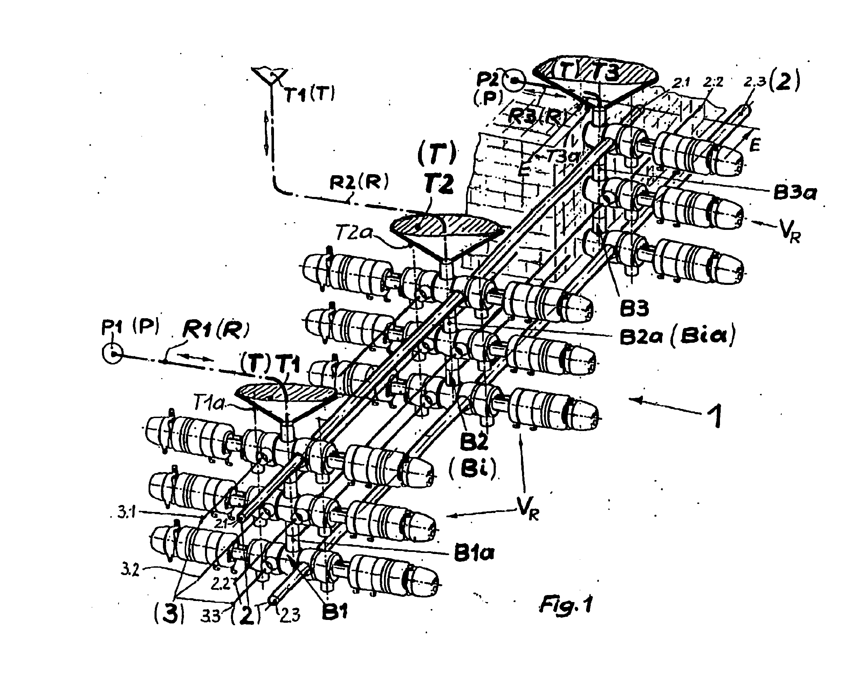

Der gattungsbildende und wohl am weitesten verbreitete Stand der Technik auf dem vorgenannten Gebiet ist in Figur 1 des Dokuments DE 101 08 259 C1 dargestellt und beschrieben (Abschnitte 003 bis 020). Dieses Beispiel beschreibt ein Verrohrungssystem einer Brauerei, welches aus fünf Gärtanks besteht. Deren Zahl ist ohne weiteres erweiterbar, und die Anlage kann typischerweise zusätzlich Prozessaggregate beinhalten, die an dem Verrohrungssystem angeschlossen sind.

Die Zuführleitungen aus den verschiedenen Tanks und Prozessaggregaten werden zu einem Ventilblock (als VB bezeichnet) geführt und von dort beispielsweise an zugeordnete Abfüllmaschinen verteilt und angeschlossen. Die Anschlussstellen, an denen sich unverträgliche Medien gegenüberstehen können (beispielsweise Würze oder Hefe oder Jungbier und jeweils Reinigungsmittel), sind mit sogenannten vermischungssicheren Ventilen, typischerweise Doppelsitzventilen, ausgerüstet.

Ein Vorteil dieses Verrohrungssystems ist, dass der Ventilblock kompakt ausgelegt werden kann, auch in Prozessanlagen, worin die Tanks und Prozessaggregate beliebig positioniert sind. Zusätzlich zu reduzierten Kosten und zu reduziertem Platzbedarf vereinfacht dies die Reinigung, Wartung und Überwachung der Prozessanlage.

Ein weiteres Verrohrungssystem ist zum Beispiel aus der DE 101 08 259 C1 bekannt, wobei dieses allerdings auf eine Verrohrungsanordnung beschränkt ist, bei der ein sogenannter Ventilverteilerbaum einem Tank eines Tanklagersystems zugeordnet ist, unmittelbar aus dessen Tankboden ausmündet und einen von unten nach oben aufsteigenden, im Regelfall einen senkrechten Verlauf aufweist. Dabei sind die Prozessleitungen und Funktionsventile direkt unter dem jeweiligen Tankauslauf angebracht. Dieses Verrohrungssystem hat sich zwischenzeitlich in der Praxis bewährt; es ist in der Firmendruckschrift **GEA Tuchenhagen Brewery Systems, ECO-Matrix^{®}, 223d-10/06,** unter der Bezeichnung ECO-Matrix^{®} und insbesondere unter dem Aspekt der Wirtschaftlichkeit und des Einflusses auf die Produktqualität näher beschrieben.

Bei dem vorgenannten Verrohrungssystem können die Funktionsventile entweder seitlich am Tankauslaufbaum, dem sog. Ventilverteilerbaum, oder senkrecht am Bodenflansch des Tanks befestigt werden. Diese Verrohrungstechnik minimiert deutlich die Entstehung von Kontamination und deren spätere Verteilung im Prozesssystem. Das vom Tank getrennt aufgebaute Rohrleitungssystem ermöglicht eine vollständige Produktentleerung und eine vom Tank unabhängige Reinigung. Im Vergleich zu den traditionellen Systemen mit vom Tank entfernt angeordneten sog. Ventilmatrixsystemen, bei denen eine Vielzahl von Ventilen zur Schaltung der vielfältigen Rohrleitungen des jeweiligen Prozesses in sog. Ventilblöcken zusammengefasst sind, verringert sich bei dieser neueren Verrohrungstechnik der instrumentelle Aufwand, während der Prozess für einen nahezu verlustfreien Produktionsbetrieb optimiert werden kann.

Der Ventilverteilerbaum ist als langgestreckter Hohlkörper ausgebildet, er ist im Wesentlichen senkrecht orientiert und er besitzt Anschlussöffnungen zum Verbinden seines Innenraumes mit Rohrleitungen eines Rohrsystems, die seitlich an dem Ventilverteilerbaum vorbeigeführt sind. In jeder Verbindung zwischen der Rohrleitung und der zugeordneten Anschlussöffnung ist ein in seinem Sitzbereich vermischungssicher ausgestaltetes Ventil angeordnet, das diese Verbindung in unmittelbarer Nähe zum Hohlkörper schaltet. Als vermischungssicheres Ventil kann dabei jeweils ein sog. Doppelsitzventil mit zwei relativ zueinander bewegbaren Schließgliedern oder ein sog. Doppeldichtventil mit zwei auf einem einzigen Schließglied in Hubrichtung beabstandeten Sitzdichtungen oder ein sog. leckagegesichertes Scheibenventil zur Anwendung kommen. Zwischen den axial beabstandeten Abdichtungsstellen des vermischungssicheren Ventils befindet sich ein Leckagehohlraum, der über wenigstens einen Verbindungsweg mit der Umgebung des Doppelsitzventils verbunden ist.

Als bevorzugtes vermischungssicheres Ventil findet in den in Rede stehenden Verrohrungssystemen bislang das vorg. Doppelsitzventil Verwendung, wobei letzteres konzentrisch ineinander angeordnete Ventilstangen für die Schließglieder aufweist, die einseitig durch das Ventilgehäuse hindurch- und aus diesem zu einem Antrieb herausgeführt sind. Ein Doppelsitzventil mit einer diesbezüglichen Schließglied- und Ventilstangenkonfiguration ist bereits aus der US 4 436 106 A bekannt. Der zwischen den beiden Schließgliedern angeordnete Leckagehohlraum wird dabei über einen Leckageablauf zwischen der Ventilstange des unabhängig angetriebenen ersten Schließgliedes und einer die Ventilstange umgebenden Hohlstange des abhängig angetriebenen zweiten Schließgliedes drainiert. Das zweite Schließglied ist dabei als Sitzteller in Form einer konischen Schließhülse ausgebildet, die an ihrem dem ersten Schließglied zugewandten Ende eine axiale Sitzdichtung trägt, die mit einem Ventilsitz am Ventilgehäuse zusammenwirkt. Das erste Schließglied ist gleichfalls als Sitzteller ausgebildet, der mit einem konischen Ventilsitz zusammenwirkt.

Eine in der DE 10 2005 051 467 A1 beschriebene Rohrverzweigungsanordnung geht von einem Verrohrungssystem gemäß DE 101 08 259 C1 aus und ordnet in diesem System an den Anschlüssen des Hohlkörpers jeweils ein vermischungssicheres Ventil an, bei dem das erste Schließglied unabhängig angetrieben ist und bei seiner Öffnungsbewegung am als Sitzteller ausgebildeten zweiten Schließglied dichtend zur Anlage kommt und dieses gleichfalls in die Offenstellung überführt. Das zweite Schließglied weist an seinem dem ersten Schließglied zugewandten Ende eine zweite Sitzdichtung auf, die mit einer an eine zylindrische erste Sitzfläche angrenzenden zweiten Sitzfläche zusammenwirkt. Das als Schieberkolben ausgebildete erste Schließglied besitzt eine radial wirkende erste Sitzdichtung, die in der Schließstellung des Ventils in der ersten Sitzfläche dichtend Aufnahme findet. Die Ventilstangen für die Schließglieder sind konzentrisch ineinander angeordnet und einseitig durch das Ventilgehäuse hindurch- und aus diesem herausgeführt.

Dabei ist das Ventil der DE 10 2005 051 467 A1 in schrägliegender Anordnung am Hohlkörper angeordnet und es besitzt, zusätzlich zum radialen Dichtungsmittel am ersten Schließglied und dem axialen Dichtungsmittel am zweiten Schließglied, eine sog. Mitteldichtung, die in der Offenstellung des Doppelsitzventils zwischen den beiden Schließgliedern wirksam und am zweiten Schließglied angeordnet ist. Durch die schrägliegende Anordnung wird erreicht, dass der Leckagehohlraum des Ventils eine sich von einem anschlussseitigen Eintritt bis zu einer vom Eintritt beabstandeten austrittsseitigen Leckageaustrittsöffnung erstreckende Umfangswand aufweist, die schwerkraftseitig zur Leckageaustrittsöffnung hin ein Gefälle aufweist. Zweck dieser Maßnahme ist eine selbsttätige Entleerung des Leckagehohlraums von sich dort ansammelnder Leckageflüssigkeit.

Die bekannte Rohrverzweigungsanordnung nach der DE 10 2005 051 467 A1 ist, ebenso wie das Verrohrungssystem nach der DE 101 08 259 C1, auf eine Anordnung beschränkt, bei der ein oberes Ende des Hohlkörpers (Ventilverteilerbaum) unmittelbar oder über ein weiteres Ventil in einem Tankboden eines darüber angeordneten Tanks ausmündet.

Aufgabe der Erfindung ist es, eine Vorrichtung zur Verrohrung der gattungsgemä-βen Art zu schaffen, die bei hoher Betriebssicherheit höchsten Anforderungen an die Qualität des in ihr behandelten fluiden Produktes gerecht wird, die insgesamt, einschließlich der vermischungssicheren Ventile, einfach, flexibel und kostengünstig aufgebaut ist und die bei allen in der Praxis vorkommenden Anordnungsvarianten des Ventilverteilerbaums in Bezug zum zugeordneten Prozessaggregat oder Tank der Prozessanlage im jeweiligen Ventilverteilerbaum weitestgehend die gleichen technologischen Bedingungen und Zustandsgrößen wie im Prozessaggregat oder Tank abbildet.

### ZUSAMMENFASSUNG DER ERFINDUNG

Die Aufgabe wird durch eine Vorrichtung zur Verrohrung mit den Merkmalen des Anspruchs 1 gelöst. Vorteilhafte Ausgestaltungen der vorgeschlagenen Vorrichtung gemäß der Erfindung sind Gegenstand der Unteransprüche.

Der Kern der Erfindung besteht darin, dass die aus dem Rohrsystem zu- oder abzuführenden fluiden Produkte das vom Ventilverteilerbaum begrenzte hohle Gebilde auf dem Weg über Anschlussöffnungen durchströmen und dass das jeweilige Fluid in diesem hohlen Gebilde in unmittelbarer Nähe zu dessen Begrenzung von den an die zugeordnete(n) Anschlussöffnung(en) heran- und an dem hohlen Gebilde vorbeigeführten Rohrleitungen des Rohrsystems durch ein vermischungssicheres Ventil wahlweise, schaltbar und vermischungssicher abtrennbar ist. Dabei mündet der jeweilige Ventilverteilerbaum unmittelbar im unteren Tankboden eines jeweils zugeordneten Tanks der Prozessanlage aus (erste Anordnungsvariante) oder/und der jeweilige Ventilverteilerbaum ist über eine zugeordnete Rohrverbindung mit einem zugeordneten Prozessaggregat oder Tank der Prozessanlage verbunden und die Rohrverbindung mündet in das tank- oder prozessaggregatseitige Ende des Ventilverteilerbaumes ein (zweite Anordnungsvariante). Dadurch werden die Verrohrungssysteme für die unterschiedlichsten Anwendungen denkbar einfach.

Eine vorteilhafte Ausführungsform sieht vor, dass bei der ersten Richtungsvariante, bei der der Ventilverteilerbaum einen von unten nach oben aufsteigenden, im Regelfall einen senkrechten Verlauf aufweist, die erste und die zweite Gruppe Rohrleitungen in jeweils reihenförmiger Anordnung untereinander, auf einander gegenüberliegenden Seiten des hohlen Gebildes, in zueinander und zur Längsachse des hohlen Gebildes parallelen Ebenen angeordnet sind. Eine derartige Verrohrung ist äußerst kompakt, raumsparend und übersichtlich.

Ein anderer Vorschlag sieht vor, dass bei der zweiten Richtungsvariante, bei der der Ventilverteilerbaum quer, im Regelfall waagerecht verläuft, die erste und die zweite Gruppe Rohrleitungen jeweils in zueinander parallelen Ebenen nebeneinander angeordnet und auf einer Seite oder auf gegenüberliegenden Seiten des hohlen Gebildes und in sich mit dessen Längsachse kreuzenden Ebenen an diesem vorbeigeführt sind. Eine derartige Verrohrung kommt dann zur Anwendung, wenn die Bauhöhe unterhalb des Tanks oder des Prozessaggregats begrenzt und dadurch die Anordnung eines Ventilverteilerbaumes mit einem von unten nach oben aufsteigenden, im Regelfall mit einem senkrechten Verlauf, nicht möglich ist und wenn gleichzeitig die gesamte relevante Verrohrung unterhalb des Auslaufs des Tanks oder des Prozessaggregats anzuordnen ist.

Das hohle Gebilde erlaubt einen sehr einfachen Anschluss des vermischungssicheren Ventils, wenn es im Umfassungsbereich seiner Anschlussöffnung als Ringgehäuse ausgebildet ist, das die beiden Sitzflächen aufnimmt und dem Anschluss des Ventilgehäuses dient.

Die Ausführung des hohlen Gebildes gestaltet sich besonders einfach, wenn es, wie dies weiterhin vorgesehen ist, als zylindrisches Rohr ausgebildet ist.

Das hohle Gebilde lässt sich restlos entleeren und einwandfrei reinigen, wenn sein dem jeweiligen Tank oder der jeweiligen vom Prozessaggregat oder Tank herangeführten Rohrverbindung abgewandtes unterstes Ende mit einem dritten Rohrsystem verbunden ist.

Die Vorrichtung wird besonders übersichtlich und einfach, wenn die Rohrleitungen, gemäß einem weiteren Vorschlag, jeweils als durchgehende, allen Rohrverbindungen in gleicher Funktion zugeordnete Rohrleitungen (Füllen; Entleeren; Rohrreinigung) ausgeführt sind.

Einfache und übersichtliche Rohrleitungsführungen ergeben sich im Rahmen des Verrohrungssystems, wenn die Ventilverteilerbäume eine reihen- oder matrixförmige Anordnung aufweisen.

Alternativ zur Ausgestaltung des hohlen Gebildes in Form eines zylindrischen Rohres ist weiterhin vorgesehen, dass das hohle Gebilde jeweils aus einer Aggregation von einzelnen Gebildeabschnitten zusammengesetzt ist, die in Richtung der Längsachse des hohlen Gebildes fluiddurchgängig miteinander verbunden sind und jeweils mindestens eine Anschlussöffnung aufweisen. Bei diesen Gehäuseteilen kann es sich entweder um diskrete, separate Teile handeln, die zu dem hohlen Gebilde in seiner Gesamtheit gefügt werden, oder um ein einstückiges Ganzes, bei dem die einzelnen Gehäuseteile stoffschlüssig miteinander verbunden sind.

Bei beiden vorg. Ausführungsvarianten sind, gemäß einem weiteren Vorschlag, die Gebildeabschnitte in Form von Gehäuseteile unterschiedlich groß ausgebildet, so dass an diesen Gehäuseteilen im Bedarfsfall, wie dies gleichfalls vorgesehen ist, wenigstens eine Anschlussöffnung ausgeführt werden kann, die einen von der Größe des jeweils zugeordneten Gehäuseteils abhängigen Durchtrittsquerschnitt aufweist. Anschlussöffnungen mit unterschiedlich großen Durchtrittsquerschnitten an einem Gehäuseteil sind gleichfalls vorgesehen. Durch diese Gestaltungsvielfalt lässt sich das hohle Gebilde in allen seinen durchströmten Bereichen an die strömungstechnischen Erfordernisse der angeschlossenen Rohrleitungen unterschiedlicher Nennweite anpassen.

### KURZBESCHREIBUNGEN DER ZEICHNUNGEN

Ausführungsbeispiele der Vorrichtung zur Verrohrung von Prozessanlagen im Rahmen der ersten und der zweiten Anordnungsvariante sowie in der ersten und der zweiten Richtungsvariante gemäß der Erfindung sind in den Figuren der Zeichnung dargestellt und werden nachfolgend hinsichtlich Aufbau und Funktion beschrieben. Es zeigen
- **Figur 1**: in Form einer teilweise schematisch dargestellten Perspektive eine erfindungsgemäße Vorrichtung mit drei Ventilverteilerbäumen in reihenförmig fluchtender Anordnung, wobei an den hohlen Gebilden der beiden vorderen Ventilverteilerbäume jeweils beidseitig, einander gegenüberliegend, in zueinander und zur Längsachse des hohlen Gebildes parallelen Ebenen Rohrsysteme vorbeigeführt und angeschlossen sind und das dritte hohle Gebilde vor einer Wand angeordnet und einseitig an das zugeordnete Rohrsystem angeschlossen ist;

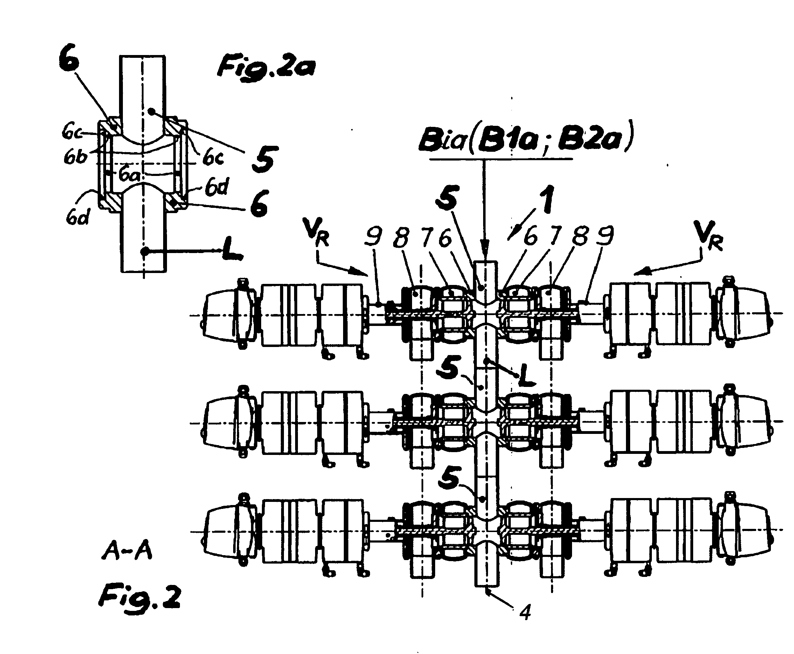

- **Figur 2**: einen Mittelschnitt durch den vorderen Ventilverteilerbaum gemäß Figur 1 entsprechend einem dort mit **A-A** gekennzeichneten Schnittverlauf, wobei entsprechende Mittelschnitte der beiden anderen Ventilverteilerbäume im vorliegenden Ausführungsbeispiel bei gleichliegenden Bauteilen zu gleichen Darstellungen führen;
- **Figur 2a**: in vergrößerter Darstellung einen Mittelschnitt durch einen der drei das hohle Gebilde gemäß **Figur 2** bildenden Gebildeabschnitte mit einem im Umfassungsbereich seiner Anschlussöffnungen jeweils vorgesehenen Ringgehäuse;

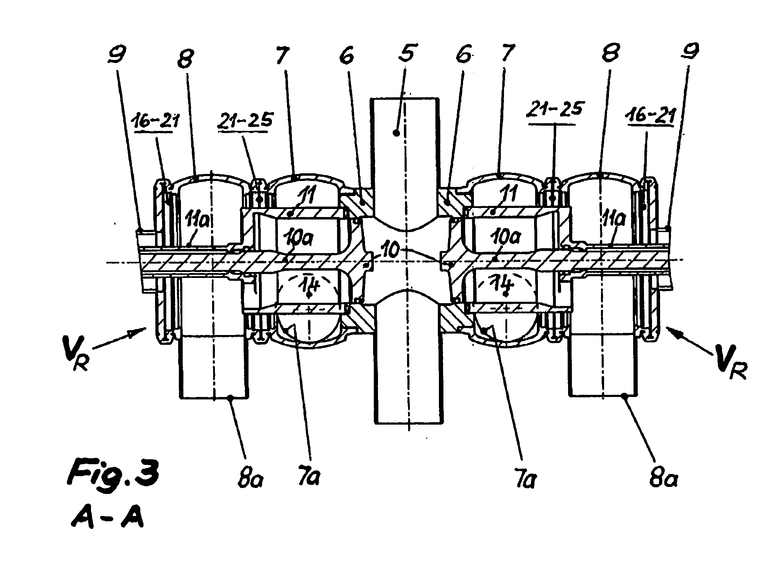

- **Figur 3**: in weiter vergrößerter Darstellung der Mittelschnitt durch einen der Gebildeabschnitte gemäß **Figur 2** mit den beidseitig angeschlossenen vermischungssicheren Doppelsitzventilen, wobei diese jeweils in ihrem Schließglied- und Ventilgehäusebereich dargestellt sind;

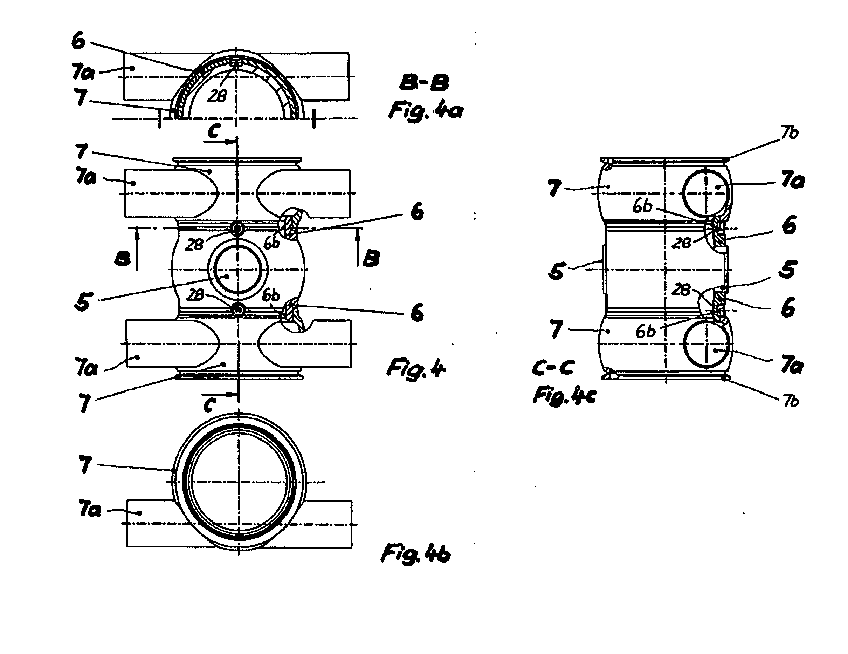

- **Figur 4**: in Ansicht eine vorteilhafte erste Ausführungsform des Gebildeabschnitts in stoffschlüssiger Verbindung mit einem auf jeder Seite angeordneten, im Nenndurchmesser jeweils gleichen Ventilgehäuse, das jeweils beidseitig tangential angeordnete Rohranschlüsse besitzt, wobei die Betrachtungsrichtung, bezogen auf die Anordnungslage, von unten erfolgt und die Verbindungsstellen zwischen dem Gebildeabschnitt und dem jeweiligen Ventilgehäuse jeweils in einem meridian verlaufenden Teilschnitt dargestellt sind;
- **Figur 4a**: einen Schnitt durch den Gebildeabschnitt gemäß **Figur 4** entsprechend einem dort mit **B-B** gekennzeichneten Schnittverlauf;
- **Figur 4b**: die Draufsicht auf den Gebildeabschnitt gemäß **Figur 4**;
- **Figur 4c**: die Seitenansicht auf den Gebildeabschnitt gemäß **Figur 4**, wobei die Darstellung Teilschnitte durch die beiderseitigen Klemmflansche und Einzelheiten im Bereich der Verbindungsstellen zwischen dem Gebildeabschnitt und den Ventilgehäusen entsprechend einem in **Figur 4** mit **C-C** gekennzeichneten Schnittverlauf enthält;

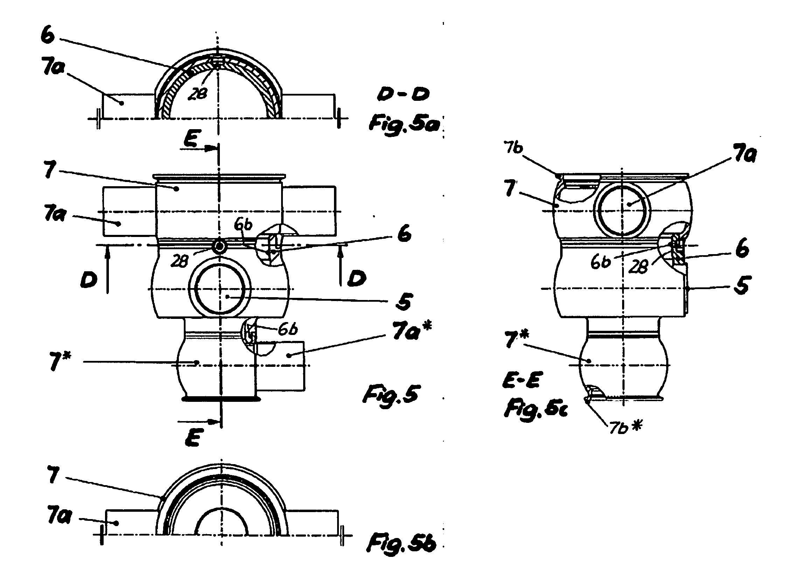

- **Figur 5**: in Ansicht eine vorteilhafte zweite Ausführungsform des Gebildeabschnitts in stoffschlüssiger Verbindung mit einem auf jeder Seite angeordneten, im Nenndurchmesser jeweils unterschiedlichen Ventilgehäuse, von denen das eine beidseitig, mittig angeordnete Rohranschlüsse und das andere einen einseitig, mittig angeordneten Rohranschluss besitzt, wobei die Betrachtungsrichtung, bezogen auf die Anordnungslage, von unten erfolgt und die Verbindungsstellen zwischen dem Gebildeabschnitt und dem jeweiligen Ventilgehäuse jeweils in einem meridian verlaufenden Teilschnitt dargestellt sind;
- **Figur 5a**: einen Schnitt durch den Gebildeabschnitt gemäß **Figur 5** entsprechend einem dort mit **D-D** gekennzeichneten Schnittverlauf;
- **Figur 5b**: die Draufsicht auf den Gebildeabschnitt gemäß **Figur 5**;
- **Figur 5c**: die Seitenansicht auf den Gebildeabschnitt gemäß Figur 5, wobei die Darstellung Teilschnitte durch die beiderseitigen Klemmflansche und Einzelheiten im Bereich der Verbindungsstellen zwischen Gebildeabschnitt und Ventilgehäusen entsprechend einem in **Figur 5** mit **E-E** gekennzeichneten Schnittverlauf enthält;

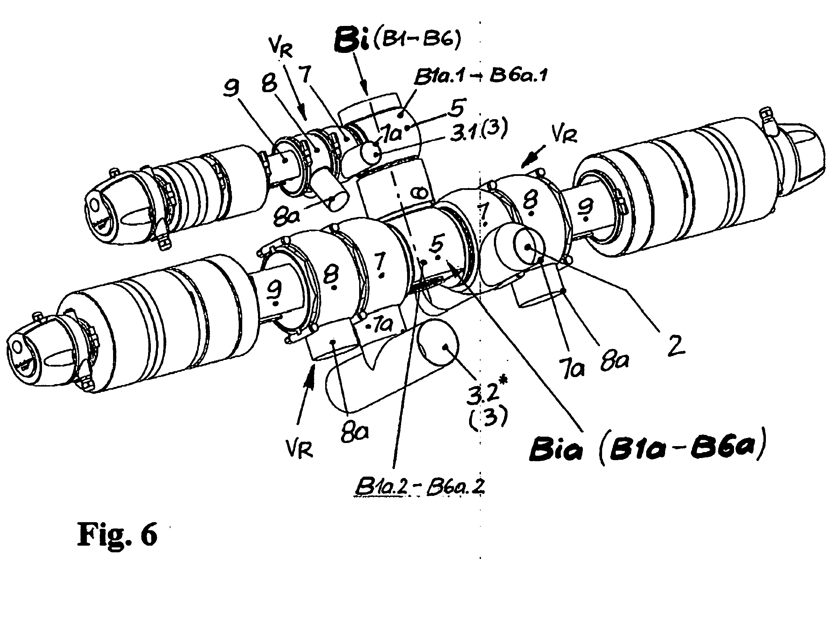

- **Figur 6**: in perspektivischer Darstellung einen Ventilverteilerbaum mit den beidseitig angeschlossenen vermischungssicheren Doppelsitzventilen und darüber mit einem einseitig angeschlossenen vermischungssicheren Doppelsitzventil, wobei die Gebildeabschnitte in Form von Gehäuseteilen unterschiedlich groß ausgebildet sind;

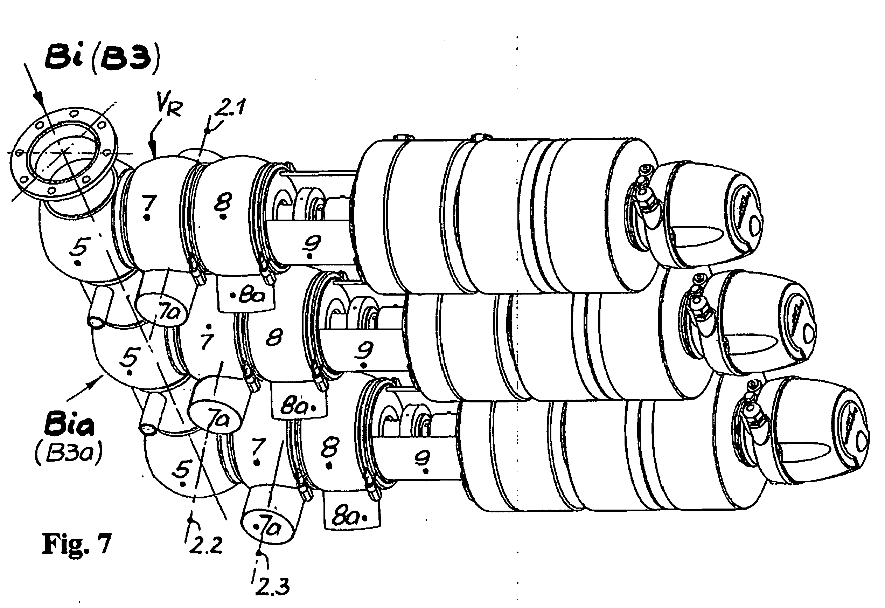

- **Figur 7**: in perspektivischer Darstellung die erfindungsgemäße Vorrichtung in der aus **Figur 1** ersichtlichen zweiten Anordnungsvariante mit einseitig am senkrecht angeordneten Ventilverteilerbaum (erste Richtungsvariante) angeschlossenen vermischungssicheren Doppelsitzventilen und

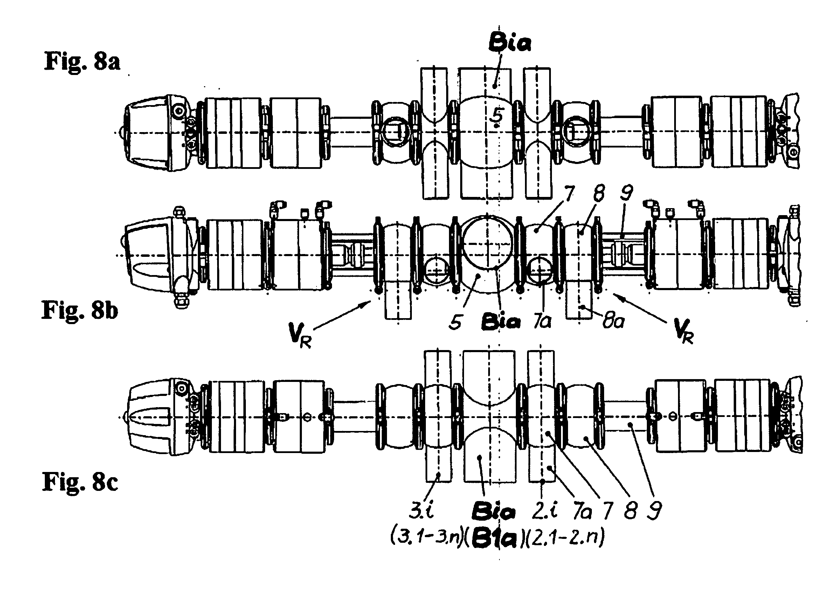

- **Figuren 8a bis 8c**: in Unteransicht, Ansicht und Draufsicht eine spezielle Ausführungsform eines Gebildeabschnitts des hohlen Gebildes mit beiderseits daran angeordneten leckagegesicherten Doppelsitzventilen, wobei es sich um einen Ventilverteilerbaum in waagerechter Anordnung (zweite Richtungsvariante der ersten oder zweiten Anordnungsvariante) handelt.
Während die Erfindung in den verschiedensten Ausbildungsformen realisierbar ist, werden in den Zeichnungen im Rahmen der vorgeschlagenen grundsätzlichen Lösung besonders bevorzugte Anordnungs- und Richtungsvarianten gezeigt und nachfolgend beschrieben unter der Voraussetzung, dass diese nur Beispiele für die Erfindung darstellen, nicht aber die Erfindung auf die speziell dargestellten Beispiele beschränkt ist.

### DETAILLIERTE BESCHREIBUNG EINER VORTEILHAFTEN AUSFÜHRUNGSFORM

Eine Vorrichtung 1 zur Verrohrung von Prozessanlagen bestehe beispielhaft aus drei Ventilverteilerbäumen B1, B2 und B3, im allgemeinsten Falle aus B1 bis Bn Ventilverteilerbäumen, die vorzugsweise reihenförmig und miteinander fluchtend nebeneinander angeordnet sind. Jeder Ventilverteilerbaum B1, B2, B3 (Bi) ist als langgestrecktes hohles Gebilde B1a, B2a, B3a (im allgemeinsten Falle B1a bis Bna; Bia), vorzugsweise in Form eines zylindrischen Rohres oder aus einer Aggregation von einzelnen Gebildeabschnitten 5 (s. **Figur 2**), ausgeführt, der einen von unten nach oben aufsteigenden, im Regelfall einen senkrechten Verlauf aufweist (erste Richtungsvariante). Die dargestellte Vorrichtung 1 zeigt weiterhin ein erstes Rohrsystem 2, das aus einer ersten Gruppe Rohrleitungen 2.1, 2.2, 2.3 (im allgemeinsten Falle aus 2.1 bis 2.i bis 2.n Rohrleitungen) besteht, und ein zweites Rohrsystem 3, das aus einer zweiten Gruppe Rohrleitungen 3.1, 3.2, 3.3 (im allgemeinsten Falle aus 3.1 bis 3.i bis 3.n Rohrleitungen) besteht. Jeweils am unteren Ende des jeweiligen Ventilverteilerbaumes B1 bis B3 kann ein drittes Rohrsystem 4 (beispielsweise für Reinigung) angeschlossen sein, wenn dieser Ort oder Zugang nicht für andere Vorkehrungen zur Verfügung stehen soll.

Die erste Gruppe Rohrleitungen 2.1, 2.2, 2.3 und die zweite Gruppe Rohrleitungen 3.1, 3.2, 3.3 sind jeweils in reihenförmiger Anordnung untereinander und, in Bezug auf die vorderen beiden Ventilverteilerbäume B1 und B2, auf einander gegenüberliegenden Seiten des hohlen Gebildes B1a, B2a, in zwei zueinander und zur Längsachse des hohlen Gebildes parallelen Ebenen angeordnet und an diesem vorbeigeführt (beidseitige Anordnung der vermischungssicheren Doppelsitzventile V_{R}). Das dritte hohle Gebilde B3a befindet sich beispielsweise unmittelbar vor einer vertikalen Wand, so dass an diesem nur das erste Rohrsystem 2 vorbeigeführt werden und Anschluss finden soll (einseitige Anordnung der vermischungssicheren Doppelsitzventile V_{R}).

Eine perspektivische Darstellung der dem hinteren Ventilverteilerbaum B3 im Wesentlichen entsprechende Anordnung zeigt **Figur 7**. Das hohle Gebilde B1a, B2a, B3a besitzt Anschlussöffnungen 6a (**Figuren 2** und **2a**) zum Verbinden seines Innenraumes mit jeder der Rohrleitungen 2.1, 2.2, ..., 2.i, ..., 2.n und 3.1, 3.2, ..., 3.1, ..., 3.n und ggf. 4. In jeder dieser Verbindungen ist das vermischungssicher ausgestaltete Doppelsitzventil V_{R} angeordnet, das diese Verbindung in unmittelbarer Nähe zum hohlen Gebilde B1 a, B2a, B3a schaltet.

Bei der in **Figur 1** dargestellten Vorrichtung 1 finden die vorstehend erwähnten Doppelsitzventile V_{R} Verwendung; gleichfalls geeignete sog. Doppeldichtventile unterscheiden sich von letzteren, von außen gesehen, im Wesentlichen nicht. Bei der gleichfalls möglichen Verwendung von leckagegesicherten Scheibenventilen ergibt sich hinsichtlich des Antriebs und eines Leckage- und Ablaufgehäuses für die Schaltleckage und das Reinigungsmittel aus der Reinigung eines Leckagehohlraumes ein anderes Erscheinungsbild, da der jeweilige Antrieb senkrecht zur Symmetrieachse der zugeordneten Anschlussöffnung 6a angeordnet ist und die Schaltleckage und das Reinigungsmittel in der Regel unmittelbar aus dem Leckage- und Ablaufgehäuse in die Umgebung abgeführt werden. Führung und Verlauf der Rohrsysteme 2 und 3 und ggf. 4 sind im Wesentlichen unabhängig von der Art der verwendeten vermischungssicheren Ventile.

Wie dies in **Figur 1** angedeutet ist, mündet der jeweilige Ventilverteilerbaum B1 bis B3 (im allgemeinsten Falle B1 bis Bi bis Bn) entweder unmittelbar im unteren Tankboden T1a bis T3a (im allgemeinsten Falle T1a bis Tia bis Tna) eines jeweils zugeordneten Tanks T1 bis T3 (Tank T; im allgemeinsten Falle T1 bis Ti bis Tn) der Prozessanlage aus (erste Anordnungsvariante) oder er ist über eine zugeordnete Rohrverbindung R (R1 bis R3; im allgemeinsten Falle R1 bis Ri bis Rn) mit einem zugeordneten Prozessaggregat P (P1, P2; im allgemeinsten Falle P1 bis Pi bis Pn) oder Tank T1 (Tank T; im allgemeinsten Falle T1 bis Ti bis Tn) der Prozessanlage verbunden und die Rohrverbindung R (R1 bis R3 (im allgemeinsten Falle R1 bis Ri bis Rn) mündet in das obere Ende des Ventilverteilerbaumes B1 bis B3 (B1 bis Bi bis Bn) ein (zweite Anordnungsvariante). Die beiden vorgenannten grundsätzlichen Anordnungsvarianten können auch in einer einzigen Vorrichtung 1 auftreten (Mischform).

Bei der zweiten Anordnungsvariante ist das obere Ende des ersten Ventilverteilerbaumes B1 über eine erste Rohrverbindung R1 beispielhaft mit einem ersten Prozessaggregat P1 verbunden, der zweite Ventilverteilerbaum B2 ist über eine zweite Rohrverbindung R2 mit einem ersten Tank T1 und der dritte Ventilverteilerbaum B3 ist über eine dritte Rohrverbindung R3 mit einem zweiten Prozessaggregat P2 verbunden. Die Rohrverbindungen R1, R2 und R3 sind im allgemeinsten Falle Rohrverbindungen R zugeordnet, die aus einer Anzahl i = 1 bis n Rohrverbindungen R1 bis Rn bestehen können.

Die Prozessaggregate P oder die Tanks T können bei der zweiten Anordnungsvariante jede Anordnung und Positionierung einnehmen, während die Ventilverteilerbäume B1 bis Bn vorzugsweise reihen- oder matrixförmig angeordnet sind. Bei den dargestellten Rohrverbindung R1 bis R3 (R1 bis Rn) kann es sich im Bereich ihres an den Ventilverteilerbaum B1 bis B3 (B1 bis Bn) angeschlossenen Endabschnitts jeweils um einen senkrechten oder einen wie auch immer geneigten Endabschnitt handeln. Der geneigte Endabschnitt, der im Grenzfall waagerecht verläuft, findet mit einem entsprechenden Rohrbogen Anschluss an dem tank- oder prozessaggregatseitigen Ende des jeweiligen Ventilverteilerbaumes B1 bis B3 (B1 bis Bn).

Die Ventilverteilerbäume Bi können, wie später noch im Einzelnen dargelegt wird, auch waagerecht angeordnet sein (zweite Richtungsvariante). Für die Verbindung des jeweiligen waagerecht angeordneten Ventilverteilerbaumes Bi mit dem zugeordneten Tank Ti oder Prozessaggregat Pi gelten die vorstehenden Ausführungen sinngemäß.

**Figur 2** zeigt, dass das hohle Gebilde B1a, B2a (im allgemeinsten Falle Bia) beispielhaft aus drei gleichen Gebildeabschnitten 5 zusammengesetzt sein kann, wobei jeder Gebildeabschnitt 5 (**Figur 2a**) im Umfassungsbereich seiner Anschlussöffnungen 6a als Ringgehäuse 6 ausgebildet ist, das jeweils innenseits eine erste Sitzfläche 6b, eine zweite Sitzfläche 6c sowie eine zylindrische Ausnehmung 6d aufnimmt. An das Ringgehäuse 6 schließt sich, jeweils quer zur Längsrichtung (Längsachse L) des Gebildeabschnitts 5, beiderseits ein erstes Ventilgehäuse 7 an (s. auch **Figur 3**), an dessen Rohranschluss 7a die Rohrleitungen 2.1, 2.2, ..., 2.i, ..., 2.n und 3.1, 3.2, ..., 3.1, ..., 3.n herangeführt sind (s. auch **Figuren 1****,** **6****,** **7****,** **8c**). Im Ausführungsbeispiel (**Figur 3**) ist vorgesehen, dass der Rohranschluss 7a am Ventilgehäuse 7, bezogen auf die Anordnungslage, mit seiner untersten inneren Mantellinie am tiefsten Punkt des Innenraumes des Ventilgehäuses 7 tangential einmündet (s. hierzu auch **Figuren 4** bis **4c**, **6****,** **8a bis 8c**).

Das Ventilgehäuse 7 ist Teil des vermischungssicheren Doppelsitzventils V_{R}. An das Ventilgehäuse 7 schließt sich, in Längsrichtung des Doppelsichtventils V_{R} gesehen, seitlich ein Leckage- und Ablaufgehäuse 8 (**Figuren 3****,** **2**) mit einem Ablaufanschluss 8a sowie ein nicht näher bezeichneter Antrieb an, wobei letzterer mit dem Leckage- und Ablaufgehäuse 8 über ein Laternengehäuse 9 verbunden ist.

Das Doppelsitzventil V_{R} ist mit zwei seriell angeordneten Schließglieder 10, 11 ausgebildet, die in der Schließstellung des Ventils das Überströmen von Fluiden vom hohlen Gebilde Bia bzw. von dem Gebildeabschnitt 5 in das Ventilgehäuse 7 verhindern. Die Schließglieder 10, 11 begrenzen sowohl in der Schließ- als auch in der Offenstellung einen Leckagehohlraum 14, der mindestens einen Verbindungsweg mit der Umgebung des Doppelsitzventils V_{R} aufweist. Im dargestellten Ausführungsbeispiel sind der Innenraum des Leckage- und Ablaufgehäuses 8 und sein Ablaufanschluss 8a Teil dieses Verbindungsweges. Das erste Schließglied 10 ist mit einer ersten Ventilstange 10a und das zweite Schließglied 11 ist mit einer zweiten Ventilstange 11a verbunden, die konzentrisch ineinander angeordnet sind und einseitig durch das erste Ventilgehäuse 7 hindurch- und aus diesem über das Leckage- und Ablaufgehäuse 8 zu dem Antrieb herausgeführt sind. Die Führung und Abdichtung des zweiten Schließgliedes 11 in einem Bereich 21 - 25 zwischen den Gehäusen 7, 8 sowie der zweiten Ventilstange 11a in einem Bereich 16 - 21 zwischen den Gehäusen 8, 9 ist nicht im Einzelnen beschrieben.

Eine vorteilhafte Ausführungsform des Gebildeabschnitts 5, seiner beiden Ringgehäuse 6 und des sich jeweils daran anschließenden Ventilgehäuses 7 zeigen die **Figuren 4** bis **4c**. Dabei sind der Gebildeabschnitt 5 und die beiden Ringgehäuse 6 einstückig ausgeführt und das erste Ventilgehäuse 7 umfasst jeweils das Ringgehäuse 6 radial außenseits und ist mit diesem stoffschlüssig, vorzugsweise durch Schweißung, verbunden. Die in **Figur 2a** bezeichnete Anschlussöffnung 6a bildet mit ihrer Umfangsbegrenzung die zylindrische erste Sitzfläche 6b für das erste Schließglied 10 aus. Für eine Spülung und/oder Drainage des Leckagehohlraumes 14 kann, wie dargestellt, ein Spülanschluss 28 vorgesehen werden. Die Rohranschlüsse 7a sind, wie vorstehend bereits beschrieben, tangential an das erste Ventilgehäuse 7 angeschlossen. Das erste Ventilgehäuse 7 besitzt an seinem dem Leckage- und Ablaufgehäuse 8 zugewandten Ende jeweils einen ersten Klemmflansch 7b, über den es mit dem Leckage- und Ablaufgehäuse 8 über einen sog. Spannring lösbar verbunden ist.

Die **Figuren 5** bis **5c** zeigen eine gegenüber den Figuren **4** bis **4c** modifizierte Gehäusekonfiguration. Der Unterschied besteht insbesondere darin, dass die beiden ersten Ventilgehäuse 7 nunmehr nicht mehr gleichgroß ausgeführt sind, sondern dass ein zweites Ventilgehäuse 7* kleiner als das erste Ventilgehäuse 7 bemessen ist und dass die dem ersten Ventilgehäuse 7 zugeordneten Rohranschlüsse 7a und ein dem zweiten Ventilgehäuse 7* zugeordneter modifizierter Rohranschluss 7a* jeweils mittig aus dem jeweiligen Ventilgehäuse 7, 7* ausmünden. Der modifizierte Rohranschluss 7a* ist mit einem zweiten Klemmflansch 7b* versehen, mit dem es mit einem nicht dargestellten Leckage- und Ablaufgehäuse 8 entsprechender Nennweite mittels eines weiteren Spannringes verbunden ist.

Die **Figur 3** zeigt weitere Einzelheiten des vermischungssicheren Doppelsitzventils V_{R}. Vom Ventilverteilerbaum Bi ist nur ein Gebildeabschnitt 5 herausgegriffen, wobei der Ventilverteilerbaum Bi über eine Rohrverbindung mit einem Prozessaggregat oder einem Tank verbunden ist. Ausgehend von den bereits vorstehend dargestellten Merkmalen des Doppelsitzventils V_{R} ist zu ergänzen, dass das erste Schließglied 10 unabhängig angetrieben ist und bei seiner Öffnungsbewegung am als Sitzteller ausgebildeten zweiten Schließglied 11 zur Anlage kommt und dieses gleichfalls in die Offenstellung überführt. Das zweite Schließglied 11 ist als Hohlstange ausgebildet, vorzugsweise als zylinderförmige Schließhülse bzw. rohrförmig und innen und außen wenigstens annähernd zylinderförmig, die an ihrer dem ersten Schließglied 10 zugewandten Stirnfläche eine axial wirkende zweite Sitzdichtung aufweist, die mit der an die zylindrische erste Sitzfläche 6b angrenzenden zweiten Sitzfläche 6c zusammenwirkt (**Figur 2a**). Das als Schieberkolben ausgebildete erste Schließglied 10 weist eine radial wirkende erste Sitzdichtung auf, die in der Schließstellung des Doppelsitzventils V_{R} in der ersten Sitzfläche 6b dichtend Aufnahme findet. Dabei ist die zylindrische erste Sitzfläche 6b in der die Anschlussöffnung 6a begrenzenden Umfangswand ausgebildet.

Das zweite Schließglied 11 weist an seinem die zweite Sitzdichtung aufnehmenden Endabschnitt innenseits eine zylindrische Aufnahmebohrung auf, die durchmessergleich mit der zylindrischen ersten Sitzfläche 6b ausgebildet ist. In der Schließstellung des zweiten Schließgliedes 11 gehen die Aufnahmebohrung und die erste Sitzfläche 6b bündig ineinander über, so dass leckagefreies Schalten mit nur zwei Sitzdichtungen gegeben ist.

Das als Hohlstange ausgebildete zweite Schließglied 11 ist an seiner äußeren Mantelfläche zylindrisch ausgebildet, und es mündet in das Leckage- und Ablaufgehäuse 8 aus (**Figur 3**), das sich mit einem Klemmflansch an der dem Ringgehäuse 6 abgewandten Seite des Ventilgehäuses 7 an letzteres anschließt. Die lösbare Verbindung übernimmt ein Spannring. Die äußere Mantelfläche ist im Verbindungsbereich zwischen dem Ventilgehäuse 7 und dem Leckage- und Ablaufgehäuse 8 geführt und abgedichtet.

Das zweite Schließglied 11 geht im Bereich des Innenraumes des Leckage- und Ablaufgehäuses 8 auf die im Durchmesser kleinere zweite Ventilstange 11a über (**Figur 3**), und es ist eine fluiddurchlässige Verbindung zwischen dem Innenraum des zweiten Schließglieds 11 und dem Innenraum der hohlstangenförmigen zweiten Ventilstange 11a über wenigstens eine im Wesentlichen radial orientierte Traverse vorgesehen. Die Ventilstangen 10a, 11a sind an der dem Ventilgehäuse 7 abgewandten Seite des Leckage- und Ablaufgehäuses 8 durch letzteres hindurchund aus diesem herausgeführt, wo sie das Laternengehäuse 9 axial durchsetzen und zu einem nicht dargestellten Antrieb des Doppelsitzventils V_{R} geführt sind. Der Leckagehohlraum 14 ist über eine durch eine innere Mantelfläche des zweiten Schließgliedes 11 begrenzte Ablaufbohrung mit dem Innenraum des Leckage- und Ablaufgehäuses 8 verbunden, der in den Ablaufanschluss 8a ausmündet.

Das Leckage- und Ablaufgehäuse 8 ist laternengehäuseseitig durch einen Deckelteil 16 verschlossen, der gehäuseseitig mittels einer weiteren Gehäusedichtung 21 und ventilstangenseitig mittels einer Stangendichtung abgedichtet ist.

Die dargestellte horizontale Anordnung des Doppelsitzventils V_{R} stellt eine bevorzugte Anordnung dar, die deshalb möglich ist, weil selbst in dieser Lage durch die vorstehend beschriebene Ausgestaltung des Doppelsitzventils V_{R} eine Selbstentleerung des Leckagehohlraumes 14 ohne Pfützenbildung möglich ist. Im allgemeinsten Falle ist eine hinsichtlich möglicher Einbaulagen aus der US 4 436 106 A bereits bekannte schwerkraftseitig abfallende Anordnung der Doppelsitzventile V_{R} am jeweiligen hohlen Gebilde Bia vorgesehen, wobei, bezogen auf die Anordnungslage, die Längsachse der konzentrisch zueinander angeordneten Schließglieder 10, 11 und ihrer Ventilstangen 10a, 11a waagerecht oder, von den Schließgliedern 10, 11 aus gesehen, bis zu einem Winkel gegen die Waagerechte abfallend verläuft, und wobei dabei eine an der tiefsten Stelle verlaufende Mantellinie der inneren Mantelfläche des zweiten Schließgliedes 11 gleichfalls wenigstens waagerecht oder unter einem Winkel gegen die Waagerechte abfallend verläuft.

Das hohle Gebilde B1a bis Bna kann jeweils auch aus einer Aggregation von einer Anzahl einzelner Gebildeabschnitten 5 zusammengesetzt sein (s. hierzu **Figuren 1****,** **2****,** **2a****,** **6**), die in Richtung der Längsachse L des Ventilverteilerbaumes B1 bis Bn fluiddurchgängig miteinander verbunden sind und jeweils mindestens auf einer Seite die Anschlussöffnung 6a aufweisen. Die Gebildeabschnitte 5 können in Form von Gehäuseteilen B1a.1 bis B6a.1 und B1a.2 bis B6a.2 (s. **Figur 6**; im allgemeinsten Falle Bia.1 bis Bia.m mit Gehäuseteilen 1 bis m des hohlen Gebildes Bia) unterschiedlich groß ausgebildet sein, wobei dann beispielsweise die jeweilige Anschlussöffnung 6a einen von der Größe des jeweils zugeordneten Gebildeabschnitts 5 abhängigen Durchtrittsquerschnitt aufweisen kann. Bei mehr als einer Anschlussöffnung 6a am jeweiligen Gebildeabschnitt 5 werden im Bedarfsfall auch unterschiedlich große Durchtrittsquerschnitte der Anschlussöffnungen 6a ausgeführt.

**Figur 6** zeigt, dass das hohle Gebilde B1a bis B6a bei einer aus sechs Ventilverteilerbäumen B1 bis B6 bestehenden Vorrichtung (im allgemeinsten Falle Bia) beispielhaft aus zwei Gebildeabschnitten 5 zusammengesetzt sein kann. An das Ringgehäuse 6 (s. hierzu **Figur 2a**) des unteren Gebildeabschnittes 5 schließt sich, jeweils quer zu dessen Längsrichtung, beiderseits das Ventilgehäuse 7 des Doppelsitzventils V_{R} an, an dessen Rohranschluss 7a (rechte Seite) die einzige Rohrleitung 2 des ersten Rohrsystems 2 herangeführt ist. Im Ausführungsbeispiel ist vorgesehen, dass der Rohranschluss 7a am Ventilgehäuse 7, bezogen auf die Anordnungslage, mit seiner untersten inneren Mantellinie am tiefsten Punkt des Innenraumes des Ventilgehäuses 7 tangential einmündet.

Das am unteren Gebildeabschnitt 5 linksseitig angeordnete Ventilgehäuse 7 mündet über den senkrecht nach unten orientierten Rohranschluss 7a in eine molchbare zweite Rohrleitung 3.2* aus der zweiten Gruppe Rohrleitungen des zweiten Rohrsystems 3 ein. Diese Rohrleitung 3.2* ist durchgängig mit einem unversperrten, Kreisform aufweisenden Durchtrittsquerschnitt ausgeführt, wodurch sie für einen Molch durchgängig ist; sie ist an dem zugeordneten Ventilgehäuse 7 des vermischungssicheren Doppelsitzventils V_{R} vorbeigeführt und mit letzterem fluidgängig verbunden. Prinzipiell kann jede der Rohrleitungen 2.1 bis 2.n der ersten Gruppe Rohrleitungen des ersten Rohrsystems 2 und jede der Rohrleitungen 3.1 bis 3.n der zweiten Gruppe Rohrleitungen des zweiten Rohrsystems 3 und ggf. auch das dritte Rohrsystem 4 in der vorbeschriebenen Weise molchbar ausgeführt werden. Am oberen Gebildeabschnitt 5 (**Figur 6**) ist nur linksseitig das Ventilgehäuse 7 eines weiteren Doppelsitzventils V_{R} angeordnet, an dessen Rohranschluss 7a die erste Rohrleitung 3.1 aus der zweiten Gruppe Rohrleitungen des zweiten Rohrsystems 3 herangeführt ist. Im Ausführungsbeispiel ist vorgesehen, dass der Rohranschluss 7a am Ventilgehäuse 7, bezogen auf die Anordnungslage, mit seiner untersten inneren Mantellinie am tiefsten Punkt des Innenraumes des Ventilgehäuses 7 tangential einmündet.

Das jeweilige Ventilgehäuse 7 ist Teil des vermischungssicheren Doppelsitzventils V_{R}. An das Ventilgehäuse 7 schließt sich, in Längsrichtung des Doppelsichtventils V_{R} gesehen, seitlich das Leckage- und Ablaufgehäuse 8 mit dem Ablaufanschluss 8a sowie ein nicht näher bezeichneter Antrieb an, wobei letzterer mit dem Leckage- und Ablaufgehäuse 8 über das Laternengehäuse 9 verbunden ist.

Die an einem senkrecht angeordneten Ventilverteilerbaum B3 (im allgemeinsten Falle Bi) jeweils einseitige Anordnung von drei übereinander angeordneten vermischungssicheren Doppelsitzventilen V_{R} entsprechend der in **Figur 1** bereits beschriebenen Verrohrung (dort der hintere Ventilverteilerbaum B3) zeigt **Figur 7**. Hinsichtlich der weiteren Ausgestaltung dieser Aggregation sei auf die Ausführungen zu **Figur 6** verwiesen.

Eine vorteilhafte Ausführungsform des Gebildeabschnitts 5, aus dem sich das hohle Gebilde B1 a (Bia) des Ventilverteilerbaumes B1 (Bi) zusammensetzt, mit beiderseits angeordneten und miteinander fluchtenden leckagesicherten Doppelsitzventilen V_{R}, wie er vorzugsweise im waagerecht angeordneten Ventilverteilerbaum B1 (Bi) zur Anwendung kommt (zweite Richtungsvariante), zeigen die **Figuren 8a** bis **8c**. Um Sumpfbildung zu vermeiden und somit eine vollständige Restentleerung zu erreichen, ist der Rohranschluss 7a tangential im unteren Bereich des Ventilgehäuses 7 angeordnet. Das hohle Gebilde B1a (Bia), das in jedem Falle die Form eines Kreisquerschnitt aufweisenden Rohrleitungsabschnittes besitzt, mündet derart in den oberen Bereich des Gebildeabschnitts 5 ein, dass bei Vermeidung eines sumpfbildenden Raumes im Gebildeabschnitt 5 unterhalb des hohlen Gebildes B1a (Bia) durch besondere formgebende Maßnahmen ein restloser Abfluss der Flüssigkeit aus letzterem in die beiderseits angeschlossenen Ventilgehäuse 8 sichergestellt ist.

Bei der zweiten Richtungsvariante verläuft der Ventilverteilerbaum Bi quer, im Regelfall waagerecht, und die erste und ggf. die zweite Gruppe Rohrleitungen 2.1 bis 2.n und 3.1 bis 3.n sind jeweils in zueinander parallelen Ebenen nebeneinander angeordnet und auf einer Seite oder auf gegenüberliegenden Seiten des hohlen Gebildes Bia und in sich mit dessen Längsachse L kreuzenden Ebenen an diesem vorbeigeführt. Eine derartige Verrohrung kommt dann zur Anwendung, wenn die Bauhöhe unterhalb des Tanks Ti oder des Prozessaggregats Pi begrenzt und dadurch die Anordnung eines Ventilverteilerbaumes Bi mit einem von unten nach oben aufsteigenden, im Regelfall mit einem senkrechten Verlauf, nicht möglich ist und wenn gleichzeitig die gesamte relevante Verrohrung unterhalb des Auslaufs des Tanks Ti oder des Prozessaggregats Pi anzuordnen ist.

Aus dem oben Genannten wird verständlich, dass verschiedene Modifikationen und Varianten der Vorrichtung zur Verrohrung von Prozessanlagen der Nahrungsmittel- und Getränkeindustrie realisiert werden können, ohne vom neuen Konzept der vorliegenden Erfindung abzuweichen. Dies ist so zu verstehen, dass keine Beschränkung auf die speziellen Ausführungsformen beabsichtigt ist, welche hier illustriert worden sind. Die Offenbarung soll alle solchen Abwandlungen umfassen, die sich innerhalb des von den Ansprüchen beanspruchten Schutzbereichs befinden.

### BEZUGSZEICHENLISTE

- 1: Vorrichtung
- 2: erstes Rohrsystem
- 2.1, 2.2, ..., 2.n: erste Gruppe Rohrleitungen
- 2.i: eine der Rohrleitungen aus der ersten Gruppe
- 2.1: erste Rohrleitung aus der ersten Gruppe
- 2.2: zweite Rohrleitung aus der ersten Gruppe
- 3: zweites Rohrsystem (z.B. Entleeren)
- 3.1, 3.2, ..., 3.n: zweite Gruppe Rohrleitungen
- 3.i: eine der Rohrleitungen aus der zweiten Gruppe
- 3.1: erste Rohrleitung aus der zweiten Gruppe
- 3.2: zweite Rohrleitung aus der zweiten Gruppe
- 3.2*: molchbare zweite Rohrleitung aus der zweiten Gruppe
- 4: drittes Rohrsystem (z.B. Reinigung)
- 5: Gebildeabschnitt
- 6: Ringgehäuse
- 6a: Anschlussöffnung
- 6b: erste Sitzfläche
- 6c: zweite Sitzfläche
- 6d: zylindrische Ausnehmung
- 7: erstes Ventilgehäuse
- 7a: Rohranschluss
- 7b: erster Klemmflansch
- 7*: zweites Ventilgehäuse
- 7a*: modifizierter Rohranschluss
- 7b*: zweiter Klemmflansch
- 8: Leckage- und Ablaufgehäuse
- 8a: Ablaufanschluss
- 8b: dritter Klemmflansch
- 9: Laternengehäuse
- 9a: Verschlussplatte
- 9b: vierter Klemmflansch
- 10: erstes Schließglied (Schieberkolben)
- 10a: erste Ventilstange
- 11: zweites Schließglied (Sitzteller)
- 11 a: zweite Ventilstange (Hohlstange)
- 12: erste Sitzdichtung
- 13: zweite Sitzdichtung
- 14: Leckagehohlraum
- 16: Deckelteil
- 21: Gehäusedichtung
- 22: Drainagering
- 22a: Drainagebohrung
- 28: Spülanschluss
- B1 bis Bn: Ventilverteilerbaum
- Bi: einer der Ventilverteilerbäume B1 bis Bn
- B1a bis Bna: hohles Gebilde
- Bia: der Rohrleitung Ri zugeordnetes hohles Gebilde B1 a bis Bna
- Bia.1 bis Bia.m: Gehäuseteile 1 bis m des hohlen Gebildes Bia
- L: Längsachse des hohlen Gebildes/Ventilverteilerbaumes
- P: Prozessaggregat (allgemein)
- P1: erstes Prozessaggregat
- P2: zweites Prozessaggregat
- P3: drittes Prozessaggregat
- Pi: i-tes Prozessaggregat
- Pn: n-tes Prozessaggregat
- R: Rohrverbindungen (allgemein); die an das obere Ende des jeweiligen Ventilverteilerbaumes B1 bis Bn herangeführt ist
- R1: erste Rohrverbindung
- R2: zweite Rohrverbindung
- R3: dritte Rohrverbindung
- Ri: Ventilverteilerbaum Bi zugeordnete Rohrverbindung
- Rn: n-te Rohrverbindung
- T: Tank (allgemein)
- T1: erster Tank
- T2: zweiter Tank
- T3: dritter Tank
- Ti: i-ter Tank
- Tn: n-ter Tank
- T1a bis Tna: unterer Tankboden des jeweiligen Tanks T1 bis Tn
- Tia: i-ter Tankboden
- V_{R}: Doppelsitzventil

## Patentansprüche

1. Vorrichtung (1) zur Verrohrung von Prozessanlagen, die aus einer Vielzahl beliebig positionierten Prozessaggregaten (P; P1, P2, ..., Pi, ..., Pn) und/oder Tanks (T; T1, T2, ..., Ti, ..., Tn) und einem aus wenigstens einer Rohrleitung (2.1, 2.2, ..., 2.i, ..., 2.n; 3.1, 3.2, ..., 3.1, ..., 3.n; 4) bestehenden Rohrsystem (2, 3, 4) bestehen, wobei zum Befördern von Fluiden aus jedem Tank (T) und/oder jedem Prozessaggregat (P) eine zugeordnete Rohrverbindung (R; R1, R2, ..., Ri, ..., Rn) zu der Vorrichtung (1) führt und wobei mindestens ein Teil von mindestens einer der Rohrverbindungen (R) einen nichtvertikalen Verlauf aufweist,
**dadurch gekennzeichnet,**
**dass** die Vorrichtung (1) aus wenigstens einem Ventilverteilerbaum (B1, B2, ..., Bi, ..., Bn) besteht, der als langgestrecktes hohles Gebilde (B1a, B2a, ..., Bia, ..., Bna) ausgeführt ist, dass der Innenraum des Ventilverteilerbaums mit der zugeordneten Rohrverbindung (R; R1, R2, ..., Ri, ..., Rn) verbunden ist, dass wenigstens eine erste Gruppe Rohrleitungen (2.1, 2.2, ..., 2.i, ..., 2.n) und im Bedarfsfall zusätzlich eine zweite Gruppe Rohrleitungen (3.1, 3.2, ..., 3.i, ..., 3.n) jeweils reihenförmig und in zur Längsachse des hohlen Gebildes parallelen Ebenen angeordnet und an diesem vorbeigeführt sind, und dass der Ventilverteilerbaum wenigstens eine Anschlussöffnung (6a) zum Verbinden seines Innenraumes mit jeder der Rohrleitungen (2.1, 2.2, ..., 2.i, ..., 2.n; 3.1, 3.2, ..., 3.1, ..., 3.n; 4) besitzt, wobei ein in seinem Sitzbereich vermischungssicher ausgestaltetes Ventil (V_{R}) in jeder Verbindung zwischen Anschlussöffnung (6a) und zugeordneter Rohrleitung angeordnet ist und diese Verbindung in unmittelbarer Nähe zum hohlen Gebilde schaltet.

2. Vorrichtung nach Anspruch 1, **dadurch gekennzeichnet, dass** das hohle Gebilde (B1a, B2a, ..., Bia, ..., Bna) im Umfassungsbereich seiner Anschlussöffnung (6a) als Ringgehäuse (6) ausgebildet ist, das Sitzflächen (6b, 6c) des eines Doppelsitzventils (V_{R}) aufnimmt und dem Anschluss eines Ventilgehäuses (7; 7*) des Doppelsitzventils (V_{R}) dient.

3. Vorrichtung nach Anspruch 1 oder 2, **dadurch gekennzeichnet, dass** das hohle Gebilde (B1a, B2a, ..., Bia, ..., Bna) als zylindrisches Rohr ausgebildet ist.

4. Vorrichtung nach einem der vorhergehenden Ansprüche, **dadurch gekennzeichnet, dass** das der jeweiligen Rohrverbindung (R; R1, R2, ..., Ri, ..., Rn) abgewandte unterste Ende des hohlen Gebildes (B1a, B2a, ..., Bia, ..., Bna) mit einem dritten Rohrsystem (4) verbunden ist.

5. Vorrichtung nach Anspruch 4, **dadurch gekennzeichnet, dass** das dritte Rohrsystem (4) für Reinigung vorgesehen ist.

6. Vorrichtung nach einem der vorhergehenden Ansprüche, **dadurch gekennzeichnet, dass** die Rohrleitungen (2.1, 2.2, ..., 2.i, ..., 2.n; 3.1, 3.2, ..., 3.1, ..., 3.n; 4) jeweils als durchgehende, allen Rohrverbindungen (R; R1, R2, ..., Ri, ..., Rn) in gleicher Funktion zugeordnete Rohrleitungen (z.B. Füllen; Entleeren; Rohrreinigung) ausgeführt sind.

7. Vorrichtung nach einem der vorhergehenden Ansprüche, **dadurch gekennzeichnet, dass** die Ventilverteilerbäume (B1, B2, ..., Bi, ..., Bn) eine reihenoder matrix-förmige Anordnung aufweisen.

8. Vorrichtung nach einem der vorhergehenden Ansprüche, **dadurch gekennzeichnet, dass** das hohle Gebilde (B1a, B2a, ..., Bia, ..., Bna) jeweils aus einer Aggregation von einzelnen Gebildeabschnitten (5) zusammengesetzt ist, die in Richtung der Längsachse (L) fluiddurchgängig miteinander verbunden sind und jeweils mindestens eine Anschlussöffnung (6a) aufweisen.

9. Vorrichtung nach Anspruch 7, **dadurch gekennzeichnet, dass** die Gebildeabschnitte (5) unterschiedlich groß ausgebildet sind.

10. Vorrichtung nach Anspruch 8, **dadurch gekennzeichnet, dass** die Anschlussöffnung (6a) einen von der Größe des jeweils zugeordneten Gebildeabschnittes (5) abhängigen Durchtrittsquerschnitt aufweist.

11. Vorrichtung nach einem der vorhergehenden Ansprüche, **dadurch gekennzeichnet, dass** wenigstens ein Teil des Rohrsystems (2, 3, 4) an oder direkt neben einer Wand angeordnet ist.

12. Vorrichtung nach einem der vorhergehenden Ansprüche, **dadurch gekennzeichnet, dass** wenigstens ein Ventilverteilerbaum (B1, B2, ..., Bi, ..., Bn) schräg oder waagerecht angeordnet ist.
